# EUROPEAN PATENT APPLICATION

(11) **EP 2 199 933 A1**
(43) Date of publication of application: **23.06.2010**
(21) Application number: 09011280.6
(22) Date of filing: 02.09.2009
(51) Int. Cl.: G06F 17/30

(54) **UI-driven binding of extension fields to business objects**

(30) Priority: 19.12.2008 US 339328
(71) Applicant: SAP AG, 69190 Walldorf (DE)
(72) Inventor: Brunswig, Frank, 69190 Walldorf (DE); Fiedler, Thomas, 69190 Walldorf (DE); Hutzel, Daniel J., 69190 Walldorf (DE); Koch, Wolfgang M., 69190 Walldorf (DE); Krane, Rolf, 69190 Walldorf (DE); Rath, Ralf, 69190 Walldorf (DE); Ritter, Gerd Martin, 69190 Walldorf (DE)
(74) Representative: Müller-Boré & Partner Patentanwälte

(57) **Abstract**

A system may include presentation of a user interface including fields associated with a business object, reception, via the user interface, of an instruction to add an extension field to the business object, reception, via the user interface, of an indication of a reference field of the business object, determination of a binding of the reference field to the business object, and binding of the extension field to the business object based on the determined binding of the reference field to the business object.

## Description

### FIELD

Some embodiments relate to business objects supported by a business process platform. More specifically, some embodiments relate to the creation of extension fields for business objects within a business process platform.

### BACKGROUND

A business object is a software model representing real-world items used during the transaction of business. For example, a business object may represent a business document such as a sales order, a purchase order, or an invoice. A business object may also master data objects such as a product, a business partner, or a piece of equipment. Particular ones of such master data objects (e.g., SalesOrder SO435539, ACME corporation) are represented by instances of their representing business object, or business object instances.

A business object may specify business logic and/or data having any suitable structure. The structure of a business object may be determined based on the requirements of a business scenario in which the business object is to be deployed. A business solution for a particular business scenario may include many business objects, where the structure of each business object has been determined based on the requirements of the particular business scenario.

A customer deploying a business solution may desire changes to the business objects included in the business solution. For example, a customer may require a field (e.g., "SeriaINumber") which does not exist within the "Product" business object of a business solution. In addition, another customer may require a different additional field in the "Product" business object and/or in another business object of the same business solution. These additional fields must be properly bound to their related business object in order to provide consistent input and display of the fields in several user interfaces, input and display of the fields in forms, usage and display of the fields in reports, searching of documents using these fields, and persistent (i.e., database) storage of the fields.

Conventional techniques for adding a field to an existing business object include APPEND mechanisms which change the definition of the business object at the data dictionary level. This technique requires advanced technical skill and presents other drawbacks as well. For example, an entire database system must be recompiled to effect such a changed definition, and the change occurs globally with respect to all instantiations of the business object within the system. Moreover, the change may require reprogramming of application clients which interact with the changed business object.

Some systems allow a user to add an extension field onto an existing user interface. The extension field must be bound to a business object so that the extension field can be retrieved in the same semantic and relationship, for example on different user interfaces. This binding must also include binding of a context and other properties of the extension field to the business object.

These systems attempt to facilitate the binding by exposing the business object model to the user interface layer. However, the user is typically unfamiliar with the rather abstract and complex model of a business object. Also, it is difficult for the user to understand the binding of the existing user interface fields of the existing user interface to the underlying business object.

Improved systems for adding extension fields to business objects are desired. An improved system may utilize a familiar end-user environment and may derive the binding of the extension fields to business objects as well as the context and properties of the extension fields. Such a system may also or alternatively avoid exposing complexities of the business object (i.e., the business object model) to the user.

### BRIEF DESCRIPTION OF THE DRAWINGS

FIG. 1 is a block diagram of a system according to some embodiments.
FIG. 2 is a view of a user interface according to some embodiments.
FIG. 3 is a flow diagram of a process according to some embodiments.
FIG. 4 is a view of a user interface according to some embodiments.
FIG. 5 is a view of a user interface according to some embodiments.
FIG. 6 is a simplified diagram of a business object according to some embodiments.
FIG. 7 is a simplified diagram of a business object according to some embodiments.
FIG. 8 is a view of a user interface according to some embodiments.
FIG. 9 is a view of a user interface according to some embodiments.

### DETAILED DESCRIPTION

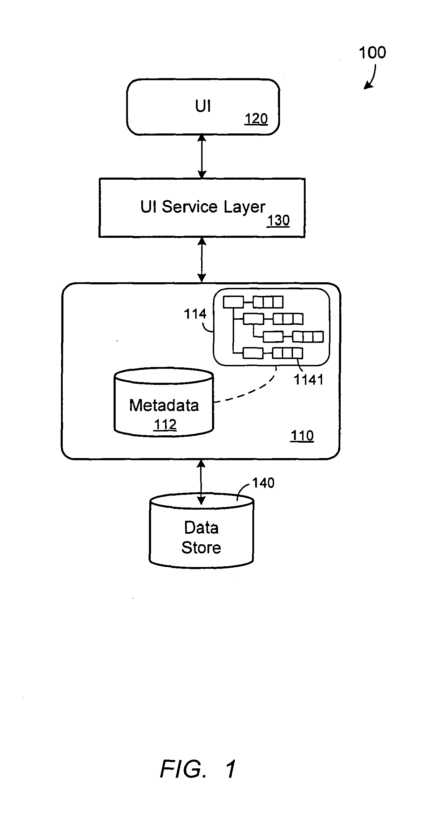

FIG. 1 is a block diagram of system 100 according to some embodiments. System 100 includes business process platform 110 and user interface 120. Generally, business process platform 110 may provide services to user interface 120 according to some embodiments. Business process platform 110 may comprise an SAP application platform based on SAP Netweaver®, but is not limited thereto. In this regard, FIG. 1 represents a logical architecture for describing processes according to some embodiments, and actual implementations may include more or different components arranged in other manners.

Business process platform 110 may provide services based on business objects as described above. Metadata 112 may include information defining the structure and attributes of these business objects, such as business object 114. In this regard, business object 114 is a model, or class. Business object 114 includes extension field 1141 which may be added thereto according to some embodiments.

An operator may manipulate user interface 120 to interact with Ul service layer 130 according to some embodiments. Such interactions may include requesting business object views, modifying business object data, and defining business object views. User interface 120 may be displayed by any suitable device. For example, the device may include any necessary software to support a proprietary interface (e.g., a proprietary client application) or execution engine (e.g., a Web browser). A device to display the user interfaces is capable of communication (including sporadic communication - e.g., mobile devices) with business process platform 110.

Ul service layer 130 communicates with business process platform 110 to provide views requested by user interface 120 and to otherwise perform requested functions. For example, Ul service layer 130 may use metadata 112 to access and manipulate data of business object instances stored in data store 140. These instances may comprise instances of business object 114.

Ul service layer 130 may communicate with an extension framework of business process platform 110 (e.g., via an Application Programming Interface) to facilitate one or more processes described herein. Generally, the extension framework may provide creation of a business object extension field according to some embodiments.

In some embodiments, any other service consumer may use the services and extension fields of platform 110. For example, the services and extension fields could be also useful for A2X services or Analytics.

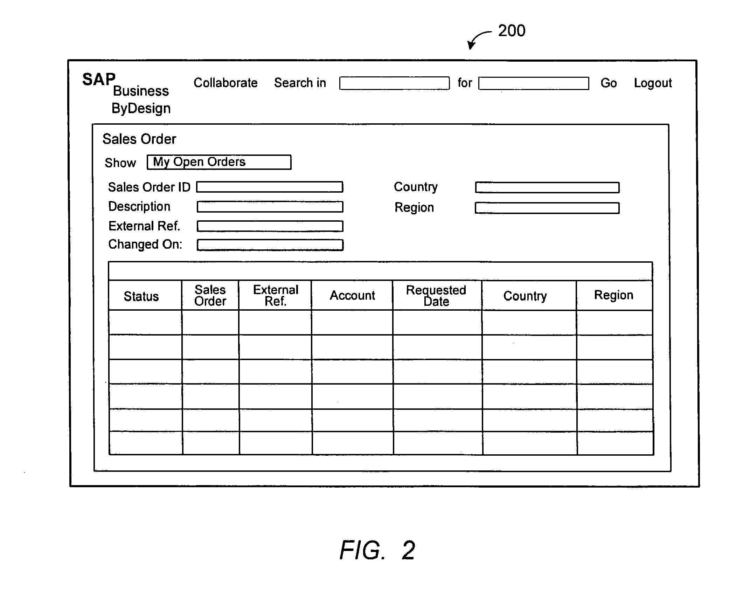

FIG. 2 illustrates user interface 200 according to some embodiments. More specifically, FIG. 2 reflects an on-demand Web-based solution in which user interface 200 is displayed by a Web browser.

User interface 200 is associated with a SalesOrder business object and served by Ul service layer 130. A user may manipulate the displayed fields to display data of different SalesOrder object instances stored in data store 140. The data may be requested from business process platform 110 by Ul service layer 130. Embodiments may be used in conjunction with any user interface associated with any one or more business objects.

A user may desire to add a field to the SalesOrder business object. According to some embodiments, such a field may be added via user interface 200. Advantageously, the user is already familiar with user interface 200 as being associated with the SalesOrder business object.

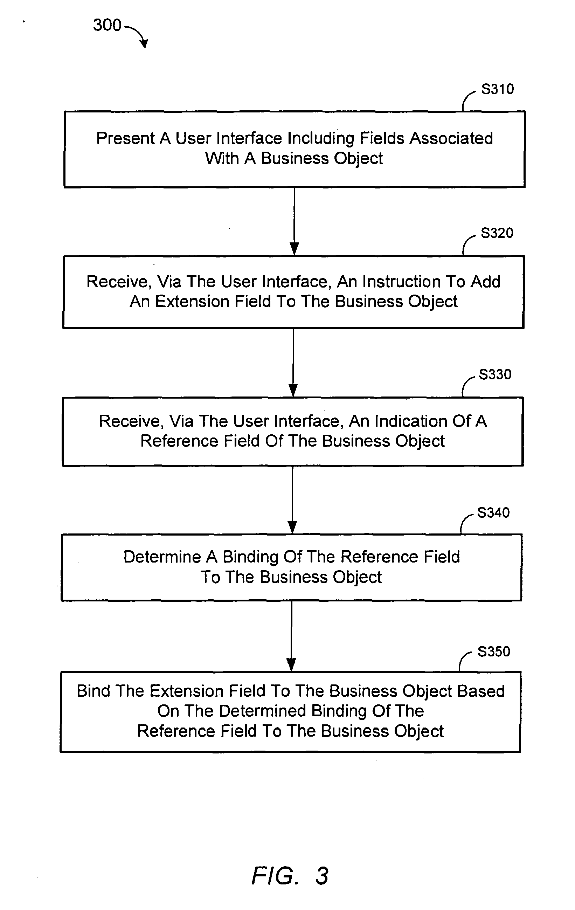

FIG. 3 is a flow diagram of process 300 to add an extension field to a business object according to some embodiments. UI service layer 130 executes process 300 according to some embodiments. An example of FIG. 3 will be described with respect to system 100 and user interface 200, but embodiments are not limited thereto.

Initially, a user interface is presented at S310. The user interface includes fields associated with a business object. For example, user interface 200 associated with a SalesOrder business object may be presented at S310. According to some embodiments, a user operates a standard or proprietary software application to request user interface 120 from Ul service layer 130. Ul service layer 130 presents user interface 120 to the application, which in turn presents the user interface to a user.

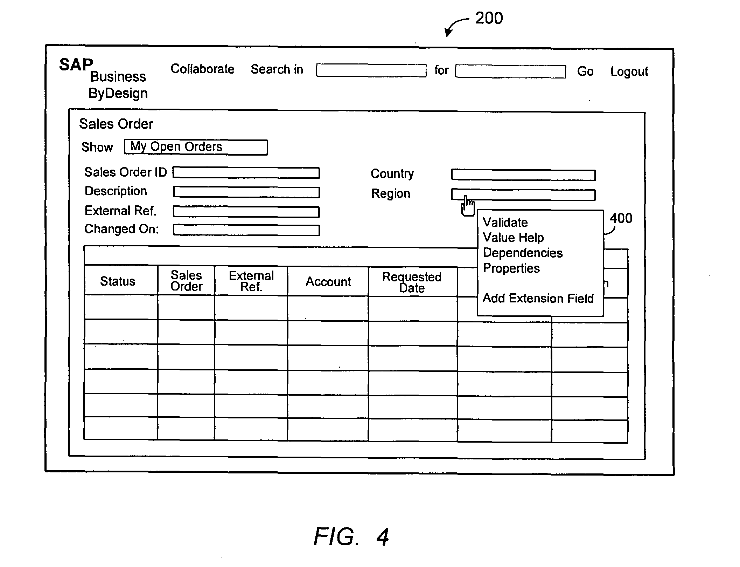

Next, at S320, an instruction to add an extension field to the business object is received via the user interface. FIG. 4 illustrates user interface 200 and context menu 400. Context menu 400 is presented in response to "right-clicking" on the Region field of user interface 200. Context menu 400 provides several options, one of which is "Add Extension Field". Selection of the "Add Extension Field" option results in reception of the instruction at S320. In some embodiments of S320, the system automatically determines and proposes an extension field by evaluating the existing fields displayed on the screen.

An indication of a reference field of the business object is received via the user interface at S330. The reference field may be used to determine the relationship (e.g., including mapping information) of the added extension field to a node or attribute of the business object.

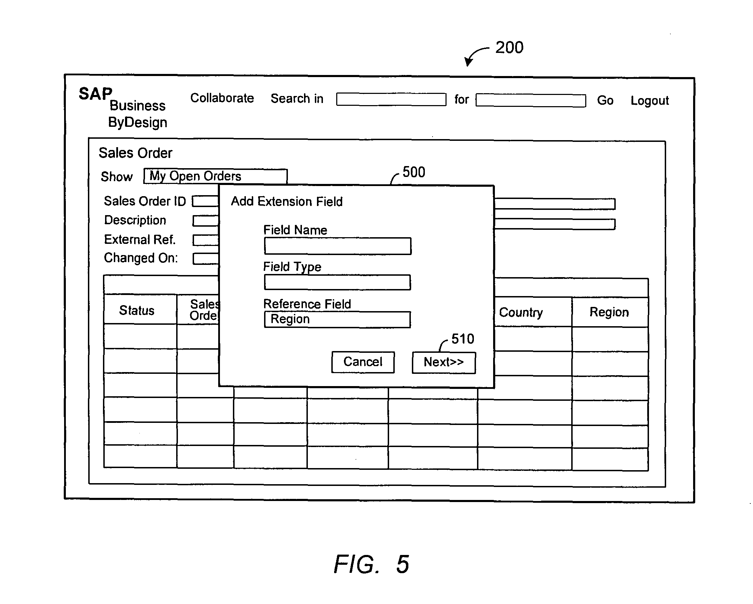

Continuing with the present example, dialog 500 of FIG. 5 may be presented to a user upon selection of the "Add Extension Field" option at S320. Dialog 500 includes input fields for a name of the extension field to be added, a type (e.g., string, currency, date, etc.), and a reference field. The user has input "Subregion" as the extension field name and "string" as the extension field type. According to the example, the Reference Field input field is pre-populated with "Region" because the Region field was right-clicked at S320. The Reference Field input field may initially be blank or populated with a name of a different default field. The reference field need not be displayed in user interface 400. Such a situation may occur in a case that the extension field was proposed by the system.

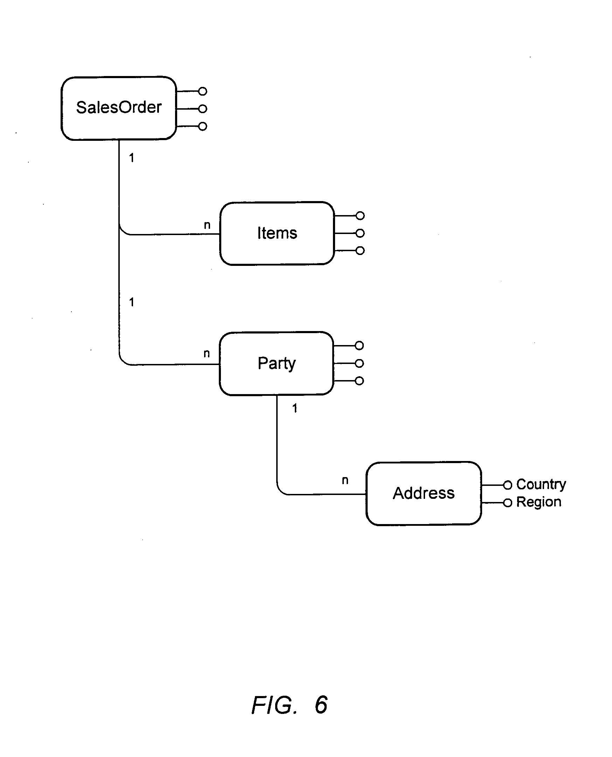

An indication of the reference field may be received at S330 after user selection of Next button 510. A binding of the reference field to the business object is determined at S340. FIG. 6 is a simplified diagram of a Sales Order business object according to some embodiments. FIG. 6 illustrates the binding of the Region reference field to the SalesOrder business object. More specifically, the Region reference field is bound to the Address node under the Party node of the SalesOrder business object. The Country field is also shown bound to the Address node.

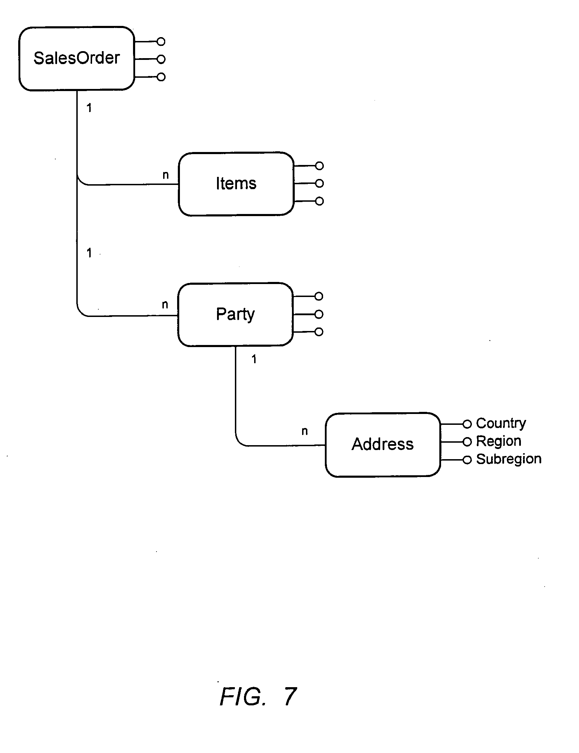

The extension field is bound to the business object at S350 based on the determined binding of the reference field to the business object. According to the present example, the Subregion extension field is bound to the Geography node at S350 as illustrated in FIG. 7. This binding may be reflected in metadata 112. Field 1141 of business object 114 represents the Subregion extension field in some embodiments. The extension field may be global (i.e., associated with all users) or specific to any subset(s) of users. For example, metadata 112 may indicate that extension field 1141 is specific to a particular company, to a subset of users of a particular company, to a particular vendor, etc.

Further attributes (e.g., context and properties) of the extension field may also be derived from the reference field. In some embodiments, the properties of the extension field are identical to the properties of the reference field. Alternatively, the properties of the reference field may be derived based on the properties of one or more other fields selected from user interface 200. Type-related properties were mentioned above. Other properties include, but are not limited to, default values, "read-only", "invisible", and "mandatory". Any property may be dependent on field values (e.g., "mandatory only in U.S.").

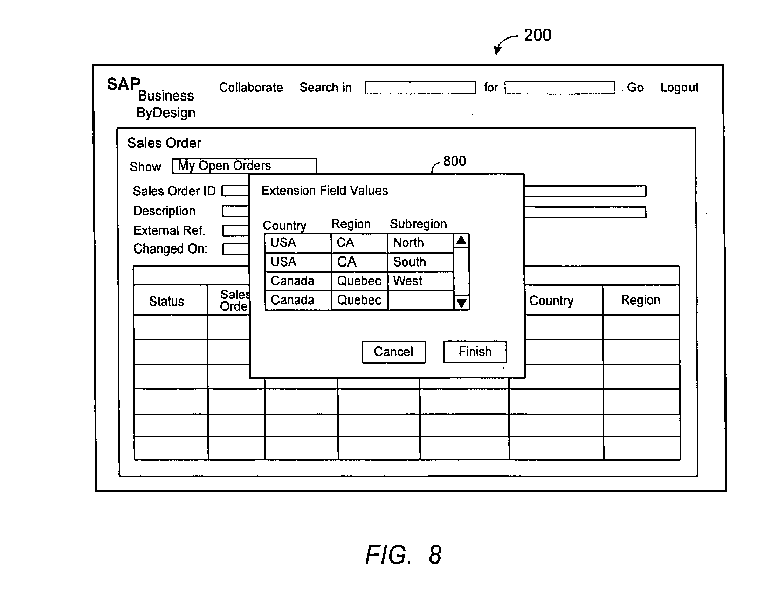

Embodiments may allow a user to specify a context of an added extension field. FIG. 8 illustrates dialog 800 to specify a context as well as value lists for extension field to be added. Dialog 800 may be presented after selection of Next button 510 of dialog 500.

The Country and Region columns of dialog 800 may be determined by UI service layer 130 based on the indicated reference field (i.e. Region), or may be dragged by a user to dialog 800 from user interface 200. These columns may be pre-populated using instance data of data store 140. A user may provide values of the Subregion extension field which correspond to each pair of Country/Region values. UI service layer 130 may maintain the list of associated values. These values may be used during validation of data input to the field or to provide value help during such data input.

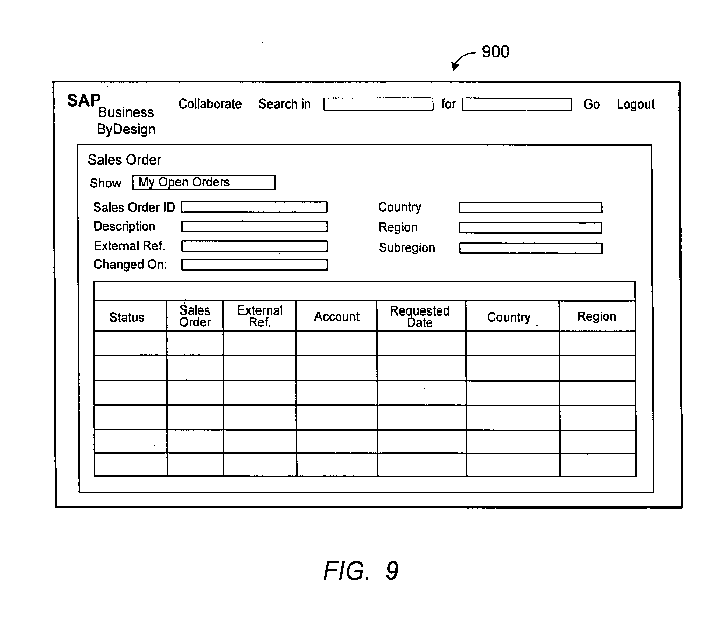

FIG. 9 illustrates user interface 900 according to some embodiments. User interface 900 is associated with the SalesOrder business object and includes the Subregion extension field added as described above. In some embodiments, the added Subregion field may be used as a reference field (and/or context field) for another extension field.

Each system and device described herein may be implemented by any number of devices in communication via any number of other public and/or private networks. Two or more of devices of may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

All systems and processes discussed herein may be embodied in program code stored on one or more computer-readable media. Such media may include, for example, a floppy disk, a CD-ROM, a DVD-ROM, a Zip™ disk, magnetic tape, and solid state RAM or ROM memories. Embodiments are therefore not limited to any specific combination of hardware and software.

The embodiments described herein are solely for the purpose of illustration. Those in the art will recognize other embodiments may be practiced with modifications and alterations limited only by the claims.

## Claims

1. A method comprising:
presenting a user interface including fields associated with a business object;
receiving, via the user interface, an instruction to add an extension field to the business object;
receiving, via the user interface, an indication of a reference field of the business object;
determining a binding of the reference field to the business object; and
binding the extension field to the business object based on the determined binding of the reference field to the business object.

2. A method according to Claim 1, further comprising:
determining a plurality of properties of the reference field; and
defining a plurality of properties of the extension field based on the plurality of properties of the reference field;
and/or
determining a context of the reference field; and
defining a context of the extension field based on the context of the reference field.

3. A method according to Claim 1 or 2, further comprising:
receiving, via the user interface, an indication of a second reference field of the business object;
determining a plurality of properties of the second reference field; and
defining a plurality of properties of the extension field based on the plurality of properties of the second reference field.

4. A method according to any one of the preceding Claims, further comprising:
receiving, via the user interface, a plurality of values of the extension field,
wherein each of the plurality of values is associated with a value of the reference field.

5. A method according to any one of the preceding Claims, further comprising:
receiving, via the user interface, an indication of a second reference field of the business object; and
defining a context of the extension field based on the reference field and the second reference field; and/or
receiving, via the user interface, a plurality of values of the extension field,
wherein each of the plurality of values is associated with a pair of values comprising a value of the reference field and a value of the second reference field.

6. A computer program product comprising a computer-readable medium having stored thereon program code, the program code executable by a computer to:
present a user interface including fields associated with a business object;
receive, via the user interface, an instruction to add an extension field to the business object;
receive, via the user interface, an indication of a reference field of the business object;
determine a binding of the reference field to the business object; and
bind the extension field to the business object based on the determined binding of the reference field to the business object.

7. A computer program product according to Claim 6, the program code further executable by a computer to:
determine a plurality of properties of the reference field; and
define a plurality of properties of the extension field based on the plurality of properties of the reference field;
and/or
determine a context of the reference field; and
define a context of the extension field based on the context of the reference field.

8. A computer program product according to Claim 6 or 7, the program code further executable by a computer to:
receive, via the user interface, an indication of a second reference field of the business object;
determine a plurality of properties of the second reference field; and
define a plurality of properties of the extension field based on the plurality of properties of the second reference field.

9. A computer program product according to any one of Claims 6 to 8, the program code further executable by a computer to:
receive, via the user interface, a plurality of values of the extension field,
wherein each of the plurality of values is associated with a value of the reference field.

10. A computer program product according to any one of Claims 6 to 9, the program code further executable by a computer to:
receive, via the user interface, an indication of a second reference field of the business object; and
define a context of the extension field based on the reference field and the second reference field;
and/or
receive, via the user interface, a plurality of values of the extension field,
wherein each of the plurality of values is associated with a pair of values comprising a value of the reference field and a value of the second reference field.

11. A system comprising:
a business process platform to store a business object; and
a user interface layer to:
present a user interface including fields associated with a business object;
receive, via the user interface, an instruction to add an extension field to the business object; and
receive, via the user interface, an indication of a reference field of the business object;
determine a binding of the reference field to the business object stored in the business process platform; and
issue an instruction to the business process platform to bind the extension field to the business object based on the determined binding of the reference field to the business object.

12. A system according to Claim 11, the user interface layer further to:
determine a plurality of properties of the reference field; and
issue an instruction to the business process platform to define a plurality of properties of the extension field based on the plurality of properties of the reference field;
and/or
determine a context of the reference field; and
issue an instruction to the business process platform to define a context of the extension field based on the context of the reference field.

13. A system according to Claim 11 or 12, the user interface layer further to:
receive, via the user interface, an indication of a second reference field of the business object;
determine a plurality of properties of the second reference field; and
issue an instruction to the business process platform to define a plurality of properties of the extension field based on the plurality of properties of the second reference field.

14. A system according to any one of Claims 11 to 13, the user interface layer further to:
receive, via the user interface, a plurality of values of the extension field,
wherein each of the plurality of values is associated with a value of the reference field.

15. A system according to any one of Claims 11 to 14, the user interface layer further to:
receive, via the user interface, an indication of a second reference field of the business object; and
issue an instruction to the business process platform to define a context of the extension field based on the reference field and the second reference field;
and/or
receive, via the user interface, a plurality of values of the extension field,
wherein each of the plurality of values is associated with a pair of values comprising a value of the reference field and a value of the second reference field.
